# EUROPÄISCHE PATENTSCHRIFT

(11) **EP 3 286 441 B1**
(45) Veröffentlichungstag und Bekanntmachung des Hinweises auf die Patenterteilung: **14.04.2021**
(21) Anmeldenummer: 16712291.0
(22) Anmeldetag: 16.03.2016
(51) Int. Cl.: F16B 7/04

(54) **TELESKOPSTANGE, INSBESONDERE FÜR EIN HANDFÜHRBARES GERÄT**
TELESCOPIC ROD, IN PARTICULAR FOR A HANDHELD DEVICE
TIGE TÉLESCOPIQUE DESTINÉE EN PARTICULIER À UN APPAREIL GUIDABLE MANUELLEMENT

(30) Priorität: 22.04.2015 DE 102015106214
(43) Veröffentlichungstag der Anmeldung: 28.02.2018
(73) Patentinhaber: Husqvarna AB, 561 82 Huskvarna (SE)
(72) Erfinder: STRAZZERI, Sandro, 89073 Ulm (DE); HECKENBERGER, Bernd, 88477 Schönebürg (DE)
(86) Internationale Anmeldenummer: PCT/EP2016/055656
(87) Internationale Veröffentlichungsnummer: WO 2016/169704

(56) Entgegenhaltungen:
- CN-Y- 201 428 673
- GB-A- 1 241 167
- GB-A- 2 331 566
- US-A1- 2006 218 752

## Beschreibung

Die Erfindung betrifft eine Teleskopstange, insbesondere für ein handführbares Gerät oder Gerätesystem. Weiterhin betrifft die Erfindung eine Führungsvorrichtung für ein handführbares Gerät oder Gerätesystem. Beispielsweise ist die Teleskopstange als Verbindungsteil zwischen einen Handgriff oder Haltegriff und dem handführbaren Gerät bzw. Gerätesystem vorgesehen.

Handführbare Geräte mit einer Teleskopstange gibt es für zahlreiche Anwendungen. Gartengeräte, wie zum Beispiel Astschneider, Rasentrimmer, Heckenscheren, Grasschneider oder Rasenmäher, die manuell oder motorisch angetrieben werden, weisen oftmals eine Teleskopstange auf. Dabei ermöglicht die Teleskopstange die Anpassung an die Körpergröße eines Benutzers und/oder an die geometrischen Eigenschaften des zu bearbeitenden Bereiches.

Bekannte Teleskopstangen sind mechanisch meist relativ aufwändig gestaltet und weisen zahlreiche Komponenten auf. Auch das Einstellen der Länge der Teleskopstange ist für den Benutzer oftmals schwierig.

Die Druckschrift GB 2 331 566 A offenbart eine Teleskopstange mit einem Innenrohr und einem Außenrohr oder Stab, der in dem Außenrohr entlang einer gemeinsamen Längsachse verschiebbar ist. Eine Halteklammer umfasst eine Muffe zum Aufnehmen eines Endbereiches des Außenrohrs und einen Klemmring zum Umschließen des Innenrohrs. Eine Überwurfmutter ist an dem Klemmring der Halteklammer angeschraubt oder anschraubbar, so dass der Klemmring eine Kraft auf den umschlossenen Bereich des Innenrohrs oder Stabes ausübt und dadurch das Innenrohr oder den Stab an der Halteklammer fixiert.

Die Druckschrift GB 1 241 167 beschreibt Teleskopstange mit Innenrohr und Außenrohr zwischen denen eine Presspassung herstellbar ist.

CN 201 428 673 Y beschreibt eine Teleskopstange mit einem Außenrohr, einem Innenrohr, das in dem Außenrohr verschiebbar ist, eine Halteklammer, die eine Muffe zum Aufnehmen eines Endbereiches des Außenrohres und einen Klemmring zum Umschließen des Innenrohres umfasst, sowie eine Überwurfmutter, die an dem Klemmring anschraubbar ist, so dass der Klemmring eine Kraft auf den umschlossenen Bereich des Innenrohres ausübt und dadurch das Innenrohr an der Halteklammer fixiert wird. Der Endbereich des Außenrohres und die Muffe werden dabei mittels eines Einrastmechanismus verbunden.

Der Erfindung liegt daher die Aufgabe zugrunde, eine Teleskopstange bereit zu stellen, die einen einfachen konstruktiven Aufbau aufweist und deren Länge auf einfache Weise einstellbar ist.

Diese Aufgabe wird durch die Teleskopstange gemäß Patentanspruch 1 gelöst.

Erfindungsgemäß ist eine Teleskopstange, insbesondere für ein handführbares Gerät oder Gerätesystem, vorgesehen, die Folgendes aufweist:
- ein Außenrohr,
- ein Innenrohr oder einen Stab, das bzw. der in dem Außenrohr entlang einer gemeinsamen Längsachse verschiebbar ist,
- eine Halteklammer, die eine Muffe zum Aufnehmen eines Endbereiches des Außenrohres und einen Klemmring zum Umschließen des Innenrohres bzw. Stabes umfasst, und
- eine Überwurfmutter, die an dem Klemmring der Halteklammer angeschraubt oder anschraubbar ist, so dass der Klemmring eine Kraft auf den umschlossenen Bereich des Innenrohres bzw. Stabes ausübt und dadurch das Innenrohr bzw. der Stab an der Halteklammer fixiert oder fixierbar ist, wobei
- der Endbereich des Außenrohres und die Muffe mittels zueinander komplementärer Elemente verbunden oder verbindbar sind.

Der Kern der Erfindung liegt darin, dass die Halteklammer einerseits den Endbereich des Außenrohres aufnimmt und andererseits zum Führen und Fixieren des Innenrohres bzw. Stabes vorgesehen ist. Dadurch ist die Teleskopstange mit wenigen Komponenten und geringem konstruktiven Aufwand realisierbar. Die zueinander komplementären Elemente ermöglichen zwischen der Halteklammer und dem Außenrohr eine feste Verbindung, die gegebenenfalls auch gelöst werden kann.

Beispielsweise ist die Halteklammer aus Kunststoff hergestellt. Dadurch lässt sich die Teleskopstange einfach und kostengünstig herstellen.

Alternativ zur erfindungsgemäßen Ausgestaltung kann die Halteklammer mit der Muffe und dem Klemmring einstückig ausgebildet sein. Somit weist die Teleskopstange mit dem Außenrohr, dem Innenrohr, der Halteklammer und der Überwurfmutter lediglich vier wesentliche Komponenten auf. Dadurch ist der konstruktive Aufwand für die Teleskopstange relativ gering.

Dabei kann vorgesehen sein, dass der Einrastmechanismus wenigstens eine Rastnase und wenigstens eine korrespondierende Ausnehmung aufweist, wobei die wenigstens eine Rastnase an der inneren Mantelfläche der Muffe und die wenigstens eine Ausnehmung im Endbereich des Außenrohres ausgebildet sein kann.

Gemäß der Erfindung ist die Halteklammer mit der Muffe und dem Klemmring zweiteilig ausgebildet ist, wobei die Halteklammer entlang der Längsachse in zwei zylindrische Halbschalen geteilt ist.

Dabei kann vorgesehen sein, dass die beiden zylindrischen Halbschalen der Halteklammer mittels eines Schnappmechanismus miteinander verbunden oder verbindbar sind, wobei vorzugsweise wenigstens eine der beiden zylindrischen Halbschalen einen oder mehrere Rasthaken aufweisen, die mit wenigstens einer Hinterschneidung an der jeweils anderen zylindrischen Halbschale in Eingriff bringbar sind oder sich in Eingriff befinden.

Insbesondere weist die Überwurfmutter ein Innengewinde und der Klemmring ein korrespondierendes Außengewinde auf, wobei das Innengewinde und das Außengewinde komplementär zueinander ausgebildet sind.

Außerdem kann das Innenrohr oder der Stab an seinem dem Außenrohr zugewandten Ende ein Führungselement aufweisen, durch welches das Innenrohr bzw. der Stab konzentrisch im Außenrohr geführt oder führbar ist.

Vorzugsweise umfasst das Führungselement einen Stopfen und einen Flansch, wobei der Stopfen in das dem Außenrohr zugewandten Ende des Innenrohres eingeführt oder einführbar ist.

Beispielsweise ist der Außendurchmesser des Führungselementes oder des Flansches geringfügig kleiner als der Innendurchmesser des Außenrohres. Dies ermöglicht eine stabile konzentrische Führung des Innenrohres im Außenrohr.

Weiterhin kann wenigstens ein Vorsprung im Inneren der Halteklammer ausgebildet sein, der dem Außenrohr zugewandt ist.

Zum Beispiel ist die der Halteklammer zugewandte Stirnseite des Außenrohres im eingerasteten Zustand des Endbereichs des Außenrohres mit dem Vorsprung in Anlage.

Alternativ oder zusätzlich kann die äußere Mantelfläche im Endbereich des Außenrohres im eingerasteten Zustand des Endbereichs des Außenrohres mit der inneren Mantelfläche der Muffe in Anlage sein.

Beispielsweise umfasst das Außenrohr wenigstens einen Anschlag, der im Inneren des Außenrohres ausgebildet ist oder sich in das Innere des Außenrohres erstreckt, wobei durch die Position des wenigstens einen Anschlags die Eindringtiefe des Innenrohres bzw. Stabes in das Außenrohr definiert ist. Gemäß einer kostengünstigen Alternative kann die Eindringtiefe des Innenrohres bzw.

Stabes durch dessen Länge definiert sein. Außerdem kann die Eindringtiefe des Innenrohres bzw. Stabes durch eine Biegung im Außenrohr definiert sein.

Weiterhin kann durch den Abstand zwischen dem wenigstens einen Anschlag und dem wenigstens einen Vorsprung der verschiebbare Bereich des Innenrohres bzw. Stabes im Außenrohr definiert sein. Ebenso kann durch die Längen des Außenrohres und des Innenrohr bzw. Stabes der verschiebbare Bereich des Innenrohres bzw. Stabes im Außenrohr definiert sein.

Beispielsweise sind das Außenrohr und das Innenrohr bzw. der Stab gleich lang oder zumindest etwa gleich lang. In diesem Fall kann die maximale Länge der Teleskopstange etwa doppelt so groß wie deren minimale Länge sein. Im Allgemeinen können sowohl das Außenrohr als auch das Innenrohr bzw. der Stab beliebige Längen haben.

Insbesondere ist das eine Ende der Teleskopstange an dem handführbaren Gerät oder Gerätesystem befestigbar, während das andere Ende der Teleskopstange an einem Handgriff, Haltegriff, Führungsgriff und/oder Bedienungshebel befestigbar ist.

Weiterhin betrifft die Erfindung eine Führungsvorrichtung für ein handführbares Gerät oder Gerätesystem, wobei die Führungsvorrichtung wenigstens eine oben beschriebene Teleskopstange sowie einen Handgriff, Haltegriff, Führungsgriff und/oder Bedienungshebel aufweist.

Außerdem offenbart ist ein handführbares Gerät oder Gerätesystem mit wenigstens einer Teleskopstange, wobei das handführbare Gerät oder Gerätesystem wenigstens eine oben beschriebene Teleskopstange aufweist.

Insbesondere ist das handführbare Gerät oder Gerätesystem ein Gartengerät. Beispielsweise ist das handführbare Gerät oder Gerätesystem ein Rasenmäher, ein Grasschneider, ein Astschneider, eine Heckenschere oder dergleichen.

Weitere Merkmale, Vorteile und besondere Ausführungsformen sind Gegenstand der abhängigen Patentansprüche.

Die Erfindung ist nachfolgend anhand eines bevorzugten Ausführungsbeispiels und unter Bezugnahme auf die Zeichnungen näher beschrieben. Es zeigen
- Figur 1: eine schematische Schnittansicht einer Teleskopstange
- Figur 2: eine schematische perspektivische Explosionsansicht einer Teleskopstange gemäß einer Ausführungsform der Erfindung, und
- Figur 3: eine Perspektivansicht eines Anwendungsbeispiels für die Teleskopstange gemäß der Erfindung.

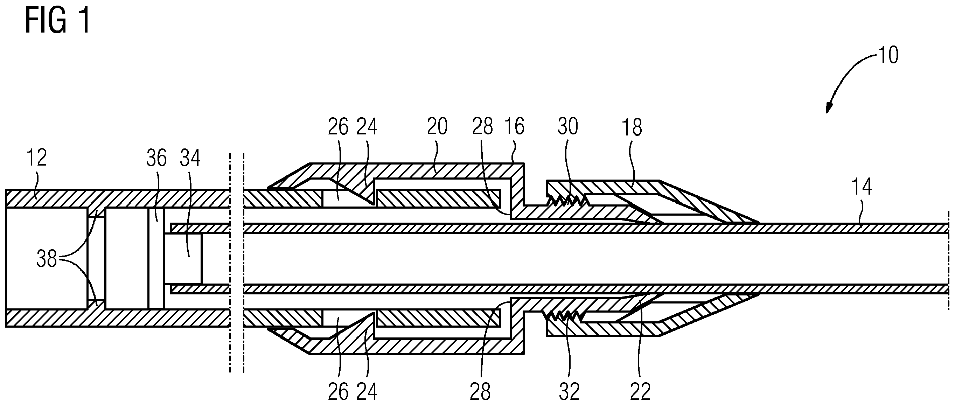

Figur 1 zeigt eine schematische Schnittansicht einer Teleskopstange 10. Die Teleskopstange 10 ist als Verbindungsteil zwischen einem Handgriff, Haltegriff, Führungsgriff oder Bedienungshebel einerseits und einem handführbaren Gerät oder Gerätesystem andererseits vorgesehen.

Die Teleskopstange 10 weist ein Außenrohr 12, ein Innenrohr 14, eine Halteklammer 16 und eine Überwurfmutter 18 auf. Das Innenrohr 14 ist innerhalb des Außenrohres 12 entlang einer gemeinsamen Längsachse verschiebbar. Alternativ zum Innenrohr 14 kann die Teleskopstange 10 beispielsweise einen massiven oder zumindest teilweise massiven Stab aufweisen, der innerhalb des Außenrohres 12 entlang der gemeinsamen Längsachse verschiebbar ist. Das Innenrohr 14 hat den Vorteil, dass ein Gestänge oder Seil für mechanische Kraftübertragungen und/oder elektrische Leitungen im Innenrohr 14 und damit innerhalb der Teleskopstange 10 angeordnet sein können.

Optional kann das Innenrohr 14 innerhalb des Außenrohres 12 auch drehbar um die gemeinsame Längsachse sein. Dadurch können der Handgriff, Haltegriff, Führungsgriff oder Bedienungshebel einerseits und das handführbare Gerät oder Gerätesystem andererseits relativ zueinander unterschiedlich ausgerichtet werden.

Die Halteklammer 16 umfasst eine Muffe 20 und einen Klemmring 22. In diesem Ausführungsbeispiel ist die Halteklammer 16 mit der Muffe 20 und dem Klemmring 22 einstückig ausgebildet.

Die Muffe 20 der Halteklammer 16 ist zum Aufnehmen eines Endbereichs des Außenrohres 12 vorgesehen. In diesem Ausführungsbeispiel sind das Außenrohr 12 und die Muffe 20 mittels eines Einrastmechanismus verbunden. Der Einrastmechanismus weist Rastnasen 24 an der inneren Mantelfläche der Muffe 20 und entsprechende Ausnehmungen 26 im Außenrohr 12 auf. Durch das Einführen des Außenrohres 12 in die Muffe 20 der Halteklammer 16 rasten die Rastnasen 24 in die entsprechenden Ausnehmungen 26 ein. Die äußere Mantelfläche des Endbereichs des Außenrohres 12 liegt an der inneren Mantelfläche der Muffe 20 und /oder die Stirnseite des Außenrohres 12 liegt an einem Vorsprung 28 in der Muffe 20 an, so dass ein stabiler Halt des Außenrohres 12 in der Muffe 20 gewährleistet ist. Vorzugsweise ist der Innendurchmesser der Muffe 20 geringfügig größer als der Außendurchmesser des Endbereichs des Außenrohres 12.

Der Klemmring 22 der Halteklammer 16 ist zum Aufnehmen des Innenrohres 14 vorgesehen. Die Überwurfmutter 18 ist zum Fixieren des Innenrohres 14 im Klemmring 22 vorgesehen. Der Klemmring 22 weist ein Außengewinde 30 auf, während die Überwurfmutter 18 ein entsprechendes Innengewinde 32 aufweist. Das Außengewinde 30 des Klemmrings 22 und das Innengewinde 32 der Überwurfmutter 18 sind zueinander komplementär. Durch das Anschrauben und Anziehen der Überwurfmutter 18 an den Klemmring 22 wird das Innenrohr 14 an der Halteklammer 16 fixiert. Wird die Überwurfmutter 18 gelockert oder gelöst, ist das Innenrohr 14 entlang seiner Längsachse verschiebbar. Die Kraft, die vom Klemmring 22 auf das Innenrohr 14 wirkt, hängt von Einstellung der Überwurfmutter 18 ab.

Weiterhin weist das Innenrohr 14 ein Führungselement 34 auf. Das Führungselement 34 ist an dem Ende des Innenrohres 14, das dem Außenrohr 12 zugewandt ist, angebracht. In diesem Ausführungsbeispiel ist das Führungselement 34 als ein Stopfen mit T-förmigem Querschnitt ausgebildet, der in das Ende des Innerohres 14 eingeführt ist. Dadurch weist das Innenrohr 14 einen Flansch 36 auf. Der Außendurchmesser des Führungselementes 34 bzw. des Flansches 36 ist geringfügig kleiner als der Innendurchmesser des Außenrohres 12. In diesem Ausführungsbeispiel ist das Führungselement 34 rotationssymmetrisch ausgebildet. Somit ist das Innenrohr 14 stets konzentrisch zum Außenrohr 12 angeordnet.

Beispielsweise sind an der Innenseite des Außenrohres 12 ein oder mehrere Anschläge 38 ausgebildet, die in einem bestimmten Abstand von der Halteklammer 16 angeordnet sind. Der Anschlag 38 kann beispielsweise als Ring an der inneren Mantelfläche oder als eine Verengung des Innerdurchmessers des Außenrohres 12 ausgebildet sein. Weiterhin können der Anschlag 38 oder die Anschläge 38 als Vorsprung bzw. Vorsprünge ausgebildet sein, die sich von der inneren Mantelfläche des Außenrohres 12 nach innen erstrecken. Der Abstand zwischen dem Anschlag 38 bzw. den Anschlägen 38 und dem Vorsprung 28 in der Muffe 22 definiert die Länge des Verschiebungsweges des Innenrohres 14. Da der Vorsprung 28 in der Muffe 20 auch zum Anliegen der Stirnseite des Außenrohres 12 vorgesehen sein kann, hat der Vorsprung 28 der Muffe 20 eine Doppelfunktion. Auch die trägt zum konstruktiv einfachen Aufbau der Teleskopstange 10 bei.

Die Länge der Teleskopstange 10 ist stufenlos zwischen einer minimalen und maximalen Länge einstellbar. Die maximale Länge der Teleskopstange 10 entspricht im Wesentlichen der Summe der Längen des Außenrohres 12 und des Innenrohres 14. Die minimale Länge der Teleskopstange 10 ist durch die Differenz zwischen der maximalen Länge und dem Abstand zwischen Vorsprung 28 und Anschlag 38 festgelegt. Wenn beispielsweise das Außenrohr 12 und Innenrohr 14 etwa gleich lang sind und der Anschlag 30 an dem der Halteklammer 16 entgegengesetzten Ende des Außenrohres 12 angeordnet ist, kann die maximale Länge der Teleskopstange 10 etwa halbiert und die minimale Länge der Teleskopstange 10 etwa verdoppelt werden.

Die Teleskopstange 10 ermöglicht eine einfache Handhabung. Der Benutzer muss lediglich die Überwurfmutter 18 lockern und festdrehen und das Innenrohr 14 verschieben. Die Teleskopstange 10 besteht aus wenigen Komponenten und ist auf einfache Weise herstellbar.

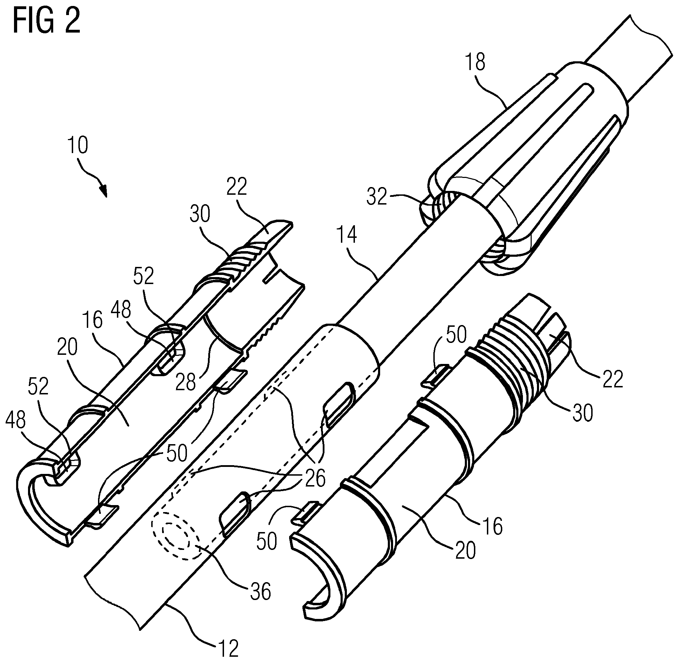

Figur 2 zeigt eine schematische perspektivische Explosionsansicht einer Teleskopstange 10 gemäß einer Ausführungsform der Erfindung. Die Teleskopstange 10 gemäß der Ausführungsform ist ebenfalls als Verbindungsteil zwischen dem Handgriff, Haltegriff, Führungsgriff oder Bedienungshebel einerseits und dem handführbaren Gerät oder Gerätesystem andererseits vorgesehen.

Die Teleskopstange 10 weist das Außenrohr 12, das Innenrohr 14, die Halteklammer 16 und die Überwurfmutter 18 auf. Das Innenrohr 14 ist innerhalb des Außenrohres 12 entlang der gemeinsamen Längsachse verschiebbar. Alternativ zum Innenrohr 14 kann die Teleskopstange 10 beispielsweise einen massiven oder zumindest teilweise massiven Stab aufweisen, der innerhalb des Außenrohres 12 entlang der gemeinsamen Längsachse verschiebbar ist. Das Innenrohr 14 ermöglicht, dass ein Gestänge oder Seil für mechanische Kraftübertragungen und/oder elektrische Leitungen im Innenrohr 14 und damit innerhalb der Teleskopstange 10 angeordnet sein können.

Die Ausführungsform unterscheidet sich von dem Beispiel der Figur 1 insbesondere dadurch, dass die Halteklammer 16 mit der Muffe 20 und dem Klemmring 22 zweiteilig ausgebildet ist. Im Gegensatz dazu ist im Beispiel der Figur 1 die Halteklammer 16 mit der Muffe 20 und dem Klemmring 22 einstückig ausgebildet. Die Halteklammer 16 ist entlang der Längsachse geteilt und umfasst zwei zylindrische Halbschalen. In diesem Beispiel sind die beiden zylindrischen Halbschalen etwa gleich groß ausgebildet.

Die Muffe 20 der Halteklammer 16 ist zum Aufnehmen des Endbereichs des Außenrohres 12 vorgesehen. Dabei werden im Ausführungsbeispiel die beiden zylindrischen Halbschalen der Halteklammer 16 an gegenüberliegenden Seiten des Endbereichs des Außenrohres 12 angelegt und miteinander verbunden. Im Gegensatz dazu wird bei dem Beispiel der Figur 1 der Endbereich des Außenrohres 12 entlang der Längsachse in die Muffe 20 der Halteklammer 16 eingeführt, wobei die Rastnasen 24 an der inneren Mantelfläche der Muffe 20 in die entsprechenden Ausnehmungen 26 im Außenrohr 12 einrasten.

Um ein Verschieben der zylindrischen Halbschalen am Außenrohr 12 entlang der Längsachse zu vermeiden, sind beispielsweise im Endbereich des Außenrohrs 12 Ausnehmungen 26 und an der inneren Mantelfläche der zylindrischen Halbschalen dazu komplementären Ausbuchtungen 48 ausgebildet. Die Ausnehmungen 26 sind zum Aufnehmen der Ausbuchtungen 48 vorgesehen. In diesem Beispiel weist der Endbereich des Außenrohres 12 vier Ausnehmungen 26 auf, während die zylindrischen Halbschalen jeweils zwei Ausbuchtungen 48 aufweisen.

Vorzugswiese werden die beiden zylindrischen Halbschalen der Halteklammer 16 mittels eines Schnappmechanismus miteinander verbunden. In diesem Ausführungsbeispiel weise jede der zylindrischen Halbschalen zwei Rasthaken 50 auf, die mit entsprechenden Hinterschneidungen 52 an der jeweils anderen zylindrischen Halbschale in Eingriff bringbar sind. Die äußere Mantelfläche des Endbereichs des Außenrohres 12 liegt an der inneren Mantelfläche der Muffe 20 und /oder die Stirnseite des Außenrohres 12 liegt an einem Vorsprung 28 in der Muffe 20 an, so dass ein stabiler Halt des Außenrohres 12 in der Muffe 20 gewährleistet ist. Vorzugsweise ist der Innendurchmesser der Muffe 20 geringfügig größer als der Außendurchmesser des Endbereichs des Außenrohres 12.

Weiterhin weist das Innenrohr 14 einen Flansch 36 auf. Der Außendurchmesser des Flansches 36 ist geringfügig kleiner als der Innendurchmesser des Außenrohres 12. Dadurch ist das Innenrohr 14 stets konzentrisch zum Außenrohr 12 angeordnet.

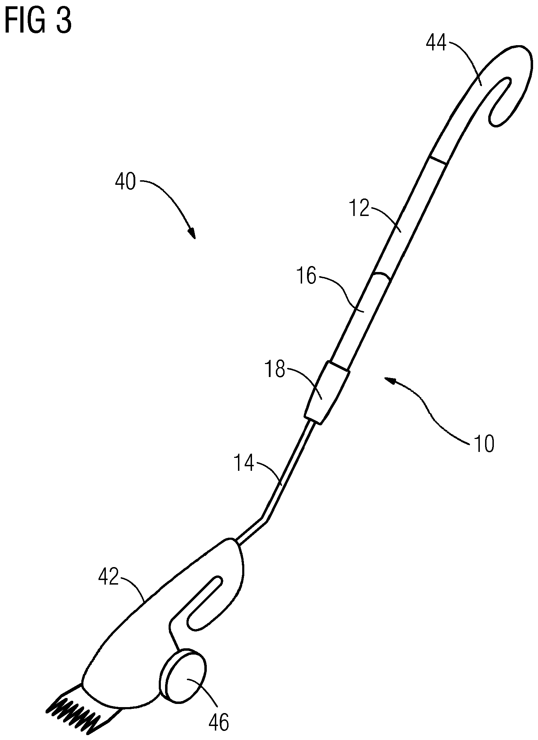

Figur 3 zeigt eine Perspektivansicht eines Anwendungsbeispiels für die Teleskopstange 10 gemäß der Erfindung. Bei diesem Anwendungsbeispiel handelt es sich um einen elektrischen Rasenschneider 40.

Der Rasenschneider 40 weist eine elektrische Rasenschere 42, die Teleskopstange 10 und einen Handgriff 44 auf. In diesem Ausführungsbeispiel umfasst die elektrische Rasenschere 42 zwei Räder 46 und kann somit auf dem Boden und über den Rasen geschoben werden. Die Teleskopstange 10 verbindet die Rasenschere 42 mit dem Handgriff 44. Mit dem Handgriff 44 kann die Rasenschere 42 über den Rasen geführt werden. Durch die Teleskopstange 10 kann der Abstand zwischen der Rasenschere 42 und dem Handgriff 44 variiert werden. Dadurch kann die Länge des Rasenschneiders 40 eingestellt werden. Insbesondere kann die Länge des Rasenschneiders 40 an die Körpergröße des Benutzers angepasst werden. Außerdem kann die Länge des Rasenschneiders 40 zum Verpacken oder zum Aufbewahren deutlich verkürzt werden. Dadurch werden die Transportkosten verringert und der Stauraum verkleinert.

In diesem Ausführungsbeispiel ist das Außenrohr 12 der Teleskopstange 10 mit dem Handgriff 44 verbunden, während das Innenrohr 14 der Teleskopstange 10 mit der Rasenschere 42 verbunden ist. Somit bildet hier das Außenrohr 12 den oberen Teil der Teleskopstange 10 und das Innenrohr 14 den unteren Teil der Teleskopstange 10. Alternativ dazu kann umgekehrt das Außenrohr 12 der Teleskopstange 10 mit der Rasenschere 42 und das Innenrohr 14 der Teleskopstange 10 mit dem Handgriff 44 verbunden sein.

Auf ähnliche Weise ist die Teleskopstange 10 auch für andere handführbare Geräte oder Gerätesysteme vorgesehen. Dabei ist die Teleskopstange 10 insbesondere als Verbindungsteil zwischen einem Handgriff 44, einem Haltegriff, einem Führungsgriff und/oder einem Bedienungshebel einerseits und dem handführbaren Gerät oder Gerätesystem vorgesehen. Beispielsweise kann die Teleskopstange 10 auch für einen Baumschneider oder Rasenmäher verwendet werden. Die Teleskopstange 10 ist sowohl für manuelle als auch motorbetriebene Geräte oder Gerätesysteme geeignet.

### Bezugszeichen

- 10: Teleskopstange
- 12: Außenrohr
- 14: Innenrohr
- 16: Halteklammer
- 18: Überwurfmutter
- 20: Muffe
- 22: Klemmring
- 24: Rastnase
- 26: Ausnehmung
- 28: Vorsprung
- 30: Außengewinde
- 32: Innengewinde
- 34: Führungselement
- 36: Flansch
- 38: Anschlag
- 40: Rasenschneider
- 42: Rasenschere
- 44: Handgriff
- 46: Rad
- 48: Ausbuchtung
- 50: Rasthaken
- 52: Hinterschneidung

## Patentansprüche

1. Teleskopstange (10), insbesondere für ein handführbares Gerät (40) oder Gerätesystem, die Folgendes aufweist:
- ein Außenrohr (12),
- ein Innenrohr (14) oder einen Stab, das bzw. der in dem Außenrohr (12) entlang einer gemeinsamen Längsachse verschiebbar ist,
- eine Halteklammer (16), die eine Muffe (20) zum Aufnehmen eines Endbereiches des Außenrohres (12) und einen Klemmring (22) zum Umschließen des Innenrohres (14) bzw. Stabes umfasst, und
- eine Überwurfmutter (18), die an dem Klemmring (22) der Halteklammer (16) angeschraubt oder anschraubbar ist, so dass der Klemmring (22) eine Kraft auf den umschlossenen Bereich des Innenrohres (14) bzw. Stabes ausübt und dadurch das Innenrohr (14) bzw. der Stab an der Halteklammer (16) fixiert oder fixierbar ist, wobei
der Endbereich des Außenrohres (12) und die Muffe (20) mittels zueinander komplementärer Elemente (26, 48) verbunden oder verbindbar sind,
**dadurch gekennzeichnet, dass**
die Halteklammer (16) mit der Muffe (20) und dem Klemmring (22) zweiteilig ausgebildet ist, wobei die Halteklammer (16) entlang der Längsachse in zwei zylindrische Halbschalen geteilt ist.

2. Teleskopstange nach Anspruch 1,
**dadurch gekennzeichnet, dass**
die Halteklammer (16) aus Kunststoff hergestellt ist.

3. Teleskopstange nach einem der vorhergehenden Ansprüche 1-2, **dadurch gekennzeichnet, dass**
die beiden zylindrischen Halbschalen der Halteklammer (16) mittels eines Schnappmechanismus miteinander verbunden oder verbindbar sind, wobei vorzugsweise wenigstens eine der beiden zylindrischen Halbschalen einen oder mehrere Rasthaken (50) aufweisen, die mit wenigstens einer Hinterschneidung (52) an der jeweils anderen zylindrischen Halbschale in Eingriff bringbar sind oder sich in Eingriff befinden.

4. Teleskopstange nach einem der vorhergehenden Ansprüche, **dadurch gekennzeichnet, dass**
die Überwurfmutter (18) ein Innengewinde (32) und der Klemmring (22) ein korrespondierendes Außengewinde (30) aufweist, wobei das Innengewinde (32) und das Außengewinde (30) komplementär zueinander ausgebildet sind.

5. Teleskopstange nach einem der vorhergehenden Ansprüche, **dadurch gekennzeichnet, dass**
das Innenrohr (14) oder der Stab an seinem dem Außenrohr (12) zugewandten Ende ein Führungselement (34, 36) aufweist, durch welches das Innenrohr (14) bzw. der Stab konzentrisch im Außenrohr (12) geführt oder führbar ist, wobei vorzugsweise das Führungselement einen Stopfen (34) und einen Flansch (36) umfasst, so dass der Stopfen (34) in das dem Außenrohr (12) zugewandten Ende des Innenrohres (14) eingeführt oder einführbar ist, und wobei insbesondere der Außendurchmesser des Führungselementes (34, 36) oder des Flansches (36) geringfügig kleiner als der Innendurchmesser des Außenrohres (12) ist.

6. Teleskopstange nach einem der vorhergehenden Ansprüche, **dadurch gekennzeichnet, dass**
wenigstens ein Vorsprung (28) im Inneren der Halteklammer (16) ausgebildet ist, der dem Außenrohr (12) zugewandt ist.

7. Teleskopstange nach Anspruch 6, **dadurch gekennzeichnet, dass**
die der Halteklammer (16) zugewandte Stirnseite des Außenrohres (12) im aufgenommenen Zustand des Endbereichs des Außenrohres (12) mit dem Vorsprung (28) in Anlage ist.

8. Teleskopstange nach einem der vorhergehenden Ansprüche, **dadurch gekennzeichnet, dass**
die äußere Mantelfläche im Endbereich des Außenrohres (12) im aufgenommenen Zustand des Endbereichs des Außenrohres (12) mit der inneren Mantelfläche der Muffe (20) in Anlage ist.

9. Teleskopstange nach einem der vorhergehenden Ansprüche, **dadurch gekennzeichnet, dass**
das Außenrohr (12) wenigstens einen Anschlag (38) aufweist, der im Inneren des Außenrohres (12) ausgebildet ist oder sich in das Innere des Außenrohres (12) erstreckt, wobei durch die Position des wenigstens einen Anschlags (38) die Eindringtiefe des Innenrohres (14) in das Außenrohr (12) definiert ist.

10. Teleskopstange nach einem der Ansprüche 6 bis 9, **dadurch gekennzeichnet, dass**
durch den Abstand zwischen dem wenigstens einen Anschlag (38) und dem wenigstens einen Vorsprung (28) der verschiebbare Bereich des Innenrohres (14) im Außenrohr (12) definiert ist.

11. Teleskopstange nach einem der vorhergehenden Ansprüche, **dadurch gekennzeichnet, dass**
das eine Ende der Teleskopstange (10) an dem handführbaren Gerät (40) oder Gerätesystem befestigbar ist, während das andere Ende der Teleskopstange (10) an einem Handgriff (44), Haltegriff, Führungsgriff und/oder Bedienungshebel befestigbar ist.

12. Führungsvorrichtung für ein handführbares Gerät (40) oder Gerätesystem,
**dadurch gekennzeichnet, dass**
die Führungsvorrichtung wenigstens eine Teleskopstange (10) nach einem der vorhergehenden Ansprüche 1 bis 11 sowie einen Handgriff (44), Haltegriff, Führungsgriff und/oder Bedienungshebel aufweist.

## Claims

1. Telescopic rod (10), in particular for a handheld device (40) or device system, which has the following:
- an outer tube (12),
- an inner tube (14) or a bar which can be shifted along a common longitudinal axis in the outer tube (12),
- a holding backet (16), which comprises a sleeve (20) for receiving an end region of the outer tube (12) and a clamping ring (22) for surrounding the inner tube (14) or bar, and
- a screwcap (18), which is screwed or can be screwed on the clamping ring (22) of the holding bracket (16), such that the clamping ring (22) exerts a force on the surrounding region of the inner tube (14) or bar, and the inner tube (14) or the bar is thus fixed or can be fixed on the holding bracket (16), wherein
the end region of the outer tube (12) and the sleeve (20) are connected or can be connected by means of elements (26, 48) complementary to one another,
**characterised in that**
the holding bracket (16) with the sleeve (20) and the clamping ring (22) is formed in two parts, wherein the holding bracket (16) is divided into two cylindrical half-shells along the longitudinal axis.

2. Telescopic rod according to claim 1,
**characterised in that**
the holding bracket (16) is produced from plastic.

3. Telescopic rod according to one of the preceding claims 1-2,
**characterised in that**
the two cylindrical half-shells of the holding bracket (16) are connected or can be connected to each other by means of a snap mechanism, wherein at least one of the two cylindrical half-shells preferably has one or more latching hooks (50), which can be brought into engagement or are in engagement with at least one undercut (52) on the other cylindrical half-shell in each case.

4. Telescopic rod according to one of the preceding claims,
**characterised in that**
the screwcap (18) has an inner thread (32) and the clamping ring (22) has a corresponding outer thread (30), wherein the inner thread (32) and the outer thread (30) are formed to be complementary to each other.

5. Telescopic rod according to one of the preceding claims,
**characterised in that**
the inner tube (14) or the bar has a guide element (34, 36) on its end facing away from the outer tube (12), by means of which guide element the inner tube (14) or the bar is guided or can be guided concentrically in the outer tube (12), wherein the guide element preferably comprises a plug (34) and a flange (36), such that the plug (34) is introduced or can be introduced into the end of the inner tube (14) facing away from the outer tube (12), and wherein, in particular, the outer diameter of the guide element (34, 36) or the flange (36) is slightly smaller than the inner diameter of the outer tube (12).

6. Telescopic rod according to one of the preceding claims,
**characterised in that**
at least one protrusion (28) is formed in inside the holding bracket (16), said protrusion facing away from the outer tube (12).

7. Telescopic rod according to claim 6,
**characterised in that**
the end side of the outer tube (12) facing away from the holding bracket (16) is in abutment with the protrusion (28) in the received state of the end region of the outer tube (12).

8. Telescopic rod according to one of the preceding claims,
**characterised in that**
the outer cover surface is in abutment with the inner cover surface of the sleeve (20) in the end region of the outer tube (12) in the received state of the end region of the outer tube (12).

9. Telescopic rod according to one of the preceding claims,
**characterised in that**
the outer tube (12) has at least one stop (38), which is formed inside the outer tube (12) or extends into the inside of the outer tube (12), wherein the penetration depth of the inner tube (14) into the outer tube (12) is defined by the position of the at least one stop (38).

10. Telescopic rod according to one of claims 6 to 9,
**characterised in that**
the shiftable region of the inner tube (14) in the outer tube (12) is defined by the distance between the at least one stop (38) and the at least one protrusion (28).

11. Telescopic rod according to one of the preceding claims,
**characterised in that**
the one end of the telescopic rod (10) can be fixed on the handheld device (40) or device system, while the other end of the telescopic rod (10) can be fixed on a handle (44), holding grip, guide grip and/or operating lever.

12. Guide device for a handheld device (40) or device system,
**characterised in that**
the guide device has at least one telescopic rod (10) according to one of the preceding claims 1 to 11, and a handle (44), holding grip, guide grip and/or operating lever.

## Revendications

1. Tige télescopique (10), destinée notamment à un appareil (40) ou système d'appareil guidable manuellement, présentant :
- un tube extérieur (12),
- un tube intérieur (14) ou une barre susceptible d'être déplacé(e) par coulissement dans le tube extérieur (12) le long d'un axe longitudinal commun,
- une attache de maintien (16) comprenant un manchon (20), destiné à loger une zone terminale du tube extérieur (12), et une bague de serrage (22) destinée à enserrer ledit tube intérieur (14) ou ladite barre, et
- un écrou-raccord (18) qui est ou peut être vissé sur la bague de serrage (22) de l'attache de maintien (16) de manière que la bague de serrage (22) exerce une force sur la zone enserrée du tube intérieur (14) ou de la barre, ledit tube intérieur (14) ou ladite barre étant ou pouvant ainsi être fixé(e) sur l'attache de maintien (16), étant entendu que
la zone terminale du tube extérieur (12) et le manchon (20) sont ou peuvent être reliés au moyen d'éléments (26, 48) complémentaires l'un de l'autre,
**caractérisée en ce que**
l'attache de maintien (16) dotée du manchon (20) et de la bague de serrage (22) est conçue en deux pièces, ladite attache de maintien (16) étant divisée en deux demi-coques cylindriques le long de l'axe longitudinal.

2. Tige télescopique selon la revendication 1,
**caractérisée en ce que**
l'attache de maintien (16) est réalisée en plastique.

3. Tige télescopique selon l'une des revendications précédentes 1 et 2,
**caractérisée en ce que**
les deux demi-coques cylindriques de l'attache de maintien (16) sont ou peuvent être reliées l'une à l'autre au moyen d'un mécanisme d'enclenchement, au moins une des deux demi-coques cylindriques présentant de préférence un ou plusieurs crochets d'encliquetage (50) qui sont emboîtés ou sont susceptibles de s'emboîter dans au moins une contre-dépouille (52) présente sur l'autre demi-coque cylindrique respective.

4. Tige télescopique selon l'une des revendications précédentes,
**caractérisée en ce que**
l'écrou-raccord (18) présente un taraudage (32) et la bague de serrage (22) un filetage (30) correspondant, ledit taraudage (32) et ledit filetage (30) étant complémentaires l'un de l'autre.

5. Tige télescopique selon l'une des revendications précédentes,
**caractérisée en ce que**
le tube intérieur (14) ou la barre présente, à son extrémité orientée vers le tube extérieur (12), un élément de guidage (34, 36) grâce auquel le tube intérieur (14) ou la barre est ou peut être guidé(e) concentriquement dans le tube extérieur (12), ledit élément de guidage comprenant de préférence un bouchon (34) et une bride (36) de telle sorte que le bouchon (34) est ou peut être introduit dans l'extrémité du tube intérieur (14) qui est orientée vers le tube extérieur (12), étant entendu notamment que le diamètre extérieur de l'élément de guidage (34, 36) ou de la bride (36) est légèrement plus petit que le diamètre intérieur du tube extérieur (12).

6. Tige télescopique selon l'une des revendications précédentes,
**caractérisée en ce que**
il est formé au moins un gradin (28) à l'intérieur de l'attache de maintien (16), lequel est orienté vers le tube extérieur (12).

7. Tige télescopique selon la revendication 6,
**caractérisée en ce que**
la face avant du tube extérieur (12) qui est orientée vers l'attache de maintien (16) est en contact avec le gradin (28) lorsque la zone terminale du tube extérieur (12) est logée dans le manchon.

8. Tige télescopique selon l'une des revendications précédentes,
**caractérisée en ce que**
la surface périphérique extérieure située dans la zone terminale du tube extérieur (12), lorsque la zone terminale du tube extérieur (12) est logée dans le manchon, est en contact avec la surface périphérique intérieure du manchon (20).

9. Tige télescopique selon l'une des revendications précédentes,
**caractérisée en ce que**
le tube extérieur (12) présente au moins une butée (38) conçue à l'intérieur du tube extérieur (12) ou s'étendant vers l'intérieur du tube extérieur (12), ladite position de l'au moins une butée (38) permettant de définir la profondeur de pénétration du tube intérieur (14) dans le tube extérieur (12).

10. Tige télescopique selon l'une des revendications 6 à 9,
**caractérisée en ce que**
la distance entre l'au moins une butée (38) et l'au moins un gradin (28) permet de définir la plage de coulissement du tube intérieur (14) dans le tube extérieur (12).

11. Tige télescopique selon l'une des revendications précédentes,
**caractérisée en ce que**
une extrémité de la tige télescopique (10) peut être fixée à l'appareil (40) ou au système d'appareil guidable manuellement, tandis que l'autre extrémité de la tige télescopique (10) peut être fixée à une poignée de type canne (44), une poignée de type anse, une poignée de guidage et/ou un levier d'actionnement.

12. Dispositif de guidage destiné à un appareil (40) ou système d'appareil guidable manuellement,
**caractérisé en ce que**
le dispositif de guidage présente au moins une tige télescopique (10) selon l'une des revendications précédentes 1 à 11 ainsi qu'une poignée de type canne (44), une poignée de type anse, une poignée de guidage et/ou un levier d'actionnement.
